# EUROPEAN PATENT SPECIFICATION

(11) **EP 1 693 774 B1**
(45) Date of publication and mention of the grant of the patent: **22.05.2013**
(21) Application number: 05022163.9
(22) Date of filing: 11.10.2005
(51) Int. Cl.: G06F 21/00, G07C 9/00, H04L 9/00

(54) **Device for authentication of an individual**
Gerät zur Authentifikation eines Individuums
Dispositif d'authentification d'individu

(30) Priority: 21.02.2005 JP 2005043371
(43) Date of publication of application: 23.08.2006
(73) Proprietor: Hitachi-Omron Terminal Solutions, Corp., Tokyo (JP)
(72) Inventor: Ogata, Hisao, Shinagawa-ku, Tokyo (JP); Imaizumi, Atsuhiro, Shinagawa-ku, Tokyo (JP); Makimoto, Eiji, Shinagawa-ku, Tokyo (JP); Nagata, Kouhei, Shinagawa-ku, Tokyo (JP)
(74) Representative: Strehl Schübel-Hopf & Partner

(56) References cited:
- EP-A- 1 265 121
- EP-A- 1 612 714
- EP-A2- 1 187 055
- WO-A-2004/010373
- WO-A-2004/013744
- FR-A- 2 840 747
- GB-A- 2 331 613
- US-A- 6 084 968
- US-A1- 2001 044 900
- US-A1- 2002 069 361
- US-A1- 2003 172 279
- US-A1- 2004 258 282
- US-A1- 2005 097 524
- US-B1- 6 751 734

## Description

### BACKGROUND OF THE INVENTION

The present invention relates to a biometric authentication apparatus for authenticating the identity of a person by using biological information such as finger prints and venous patterns. More particularly, the present invention relates to an apparatus for executing a biometric information acquiring process in a biometric authentication apparatus, in order to prevent biometric information acquired by the biometric authentication apparatus from outflowing from the apparatus and being tampered by a malicious third party.

In order to prevent identity theft for deposit withdrawal at financial agencies and for electronic commercial transactions on the Internet, it is very important to execute biometric authentication for confirming the identity of an individual. Generally and widely used authentication methods include a card with magnetic stripes, password input, verification of signatures written on the bottom of a card and given when a product is bought.

However, some problems regarding security have been pointed out for such conventional individual authentication methods. In a combination of a cash card having magnetic stripes and password input, deposit can be withdrawn easily if a third party steals magnetic information and the password. Alternatively, a third party can imitate a signature to rob money.

As a countermeasure, introducing an IC card has been proposed to replace a card having magnetic stripes. As compared to a magnetic stripe card, it is difficult to copy an IC card and is possible to retain security because the internal information is not stolen easily. In addition, attention has been paid to a great increase in an amount of information capable of being stored in an IC card. JP-A-61-199162 and JP-A-10-312459 disclose biometric authentication techniques of storing biometric information such as finger prints and venous patterns in an IC card to perform verification.

A method and apparatus for secure acquisition and storage of fingerprint data on a smartcard is disclosed in WO 2004/010373. US 2004/0258282 describes a fingerprint recognition system which is adapted to capture and digitise several fingerprints from a user and select the best print for further processing.

FR 2 840 747 describes the secure access to a computer system by fingerprint recognition.

WO 2004/013744 and US 6,084,968 relate to data encryption systems which store data processing and encryption algorithms in encrypted form.

Other conventional systems related to the field of the present invention are disclosed in US 2003/0172279, US 6,751,734, GB 2 331 613, and EP 1 187 055.

### SUMMARY OF THE INVENTION

According to the above-described related art, for example, if biometric information outflows from an authentication apparatus, there is a possibility that a malicious third party steals this information and abuses it. Individual authentication by biometric information provides higher safety than authentication by a password or signature, whereas once the biometric information outflows, it cannot be changed easily, providing a negative point. It is very important to provide a countermeasure of preventing an outflow of biometric information in the form easily abused by a third party.

It is also essential to retain security of a biometric authentication program for extracting and verifying biometric feature parameters as biometric information. The advantages of a biometric authentication apparatus may be lost if analysis and alteration of the contents of the program by a third party are not made impossible. In this context, if a biometric authentication program exists in an analyzable state in a control apparatus connected to the biometric authentication apparatus, e.g., a personal computer, there is a high possibility that the process sequence of the program is analyzed and stolen by a third party. Even if the biometric authentication program exists not in a personal computer but in a biometric authentication apparatus in a state easily analyzed from an external, the information may be stolen by a malicious third party.

It is necessary to prevent a biometric authentication result output from a biometric authentication apparatus from being leaked to a third party. If a third party forges an authentication acceptance signal from the biometric authentication apparatus, the authentication acceptance signal is sent to a control apparatus connected to the authentication apparatus even if the apparatus issues an authentication rejection, resulting in a possibility of an unauthorized transaction.

The present invention as defined in claim 1 has been made in order to solve at least some of the above-described issues. A first object of the present invention is to prevent individual biometric information from outflowing from a biometric authentication apparatus in the form easily abused by a third party. A second object of the present invention is to prevent a biometric authentication program for extracting and verifying biometric feature parameters from being stolen or altered by a third party. A third object of the present invention is to prevent leakage to an external of a biometric authentication result output from the biometric authentication apparatus.

In a preferred example useful to understand the invention, a biometric authentication apparatus for checking the identity of an individual by using biometric information on the individual: fetches the biometric information; extracts biometric feature parameters for authentication from acquired sensor information; encrypts the extracted biometric feature parameters; and outputs, to an external of the biometric authentication apparatus, the encrypted biometric feature parameters as authentication criterion data for checking the identity of an individual.

According to another preferred example, in a biometric authentication apparatus for checking the identity of an individual by using biometric information on the individual, a sensor fetches the biometric information; and the biometric authentication apparatus extracts biometric feature parameters for authentication from acquired sensor information, encrypts the extracted biometric feature parameters; and outputs directly to an IC card without involving a control computer connected to the biometric authentication apparatus, the encrypted biometric feature parameters as authentication criterion data for checking the identity of an individual.

According to another preferred example, in a biometric authentication apparatus for checking the identity of an individual by using biometric information on the individual: the biometric information is fetched with a sensor; biometric feature parameters for authentication are extracted from acquired sensor information; encrypted biometric feature parameters as authentication criterion data are input from an external of the biometric authentication apparatus; the encrypted biometric feature parameters as authentication criterion data are decrypted, verification is performed between the input biometric feature parameters and the decrypted biometric feature parameters as authentication criterion data; an output of the verification result is encrypted; and an encrypted verification result is output to an external apparatus.

According to another preferred example, a biometric authentication apparatus for checking the identity of an individual by using biometric information on the individual: fetches the biometric information; extracts biometric feature parameters for authentication from acquired sensor information; inputs, directly from an IC card without involving a control computer connected to the biometric authentication apparatus, encrypted biometric feature parameters as authentication criterion data stored in the IC card; decrypts the encrypted biometric feature parameters as authentication criterion data; performs verification between the output biometric feature parameters and the decrypted biometric feature parameters as authentication criterion data; encrypts an output of a biometric feature parameter verification result; and outputs an encrypted verification result to an apparatus external.

According to another preferred example, a biometric authentication apparatus stores a program for the feature parameter extracting process and a program for the biometric feature parameter verifying process in an encrypted state before the apparatus is activated, and decrypts the programs after the apparatus is activated.

According to another preferred example, a biometric authentication apparatus divisionally stores a program for the feature parameter extracting process and a program for the biometric feature parameter verifying process in a control computer connected to the biometric authentication apparatus and the biometric authentication apparatus in an encrypted state before the apparatus is activated, and couples and decrypts the programs to be operable after the apparatus is activated.

### BRIEF DESCRIPTION OF THE DRAWINGS

Fig. 1 is a diagram showing an example of the overall configuration of a financial business shop system which uses biological information.
Fig. 2 is a diagram showing an example of the structure of a biometric authentication apparatus with an IC card drive connected to a business shop window terminal.
Fig. 3 is a diagram showing an example of the structure of the business shop window terminal.
Fig. 4 is a flow chart illustrating a process of registering biometric authentication feature parameters in an IC card by using the business shop window terminal and the biometric authentication apparatus with an IC card drive.
Fig. 5 is a diagram showing an example of the structure of an automated teller machine (ATM).
Fig. 6 is a diagram showing an example of the structure of the biometric authentication apparatus connected to ATM.
Fig. 7 is a flow chart illustrating the sequence of business transactions including a biometric authentication process at ATM.
Fig. 8 is a flow chart illustrating the operation of the biometric authentication apparatus connected to ATM.

### DESCRIPTION OF THE EMBODIMENTS

Preferred embodiments of the present invention will be described with reference to the accompanying drawings.

In an embodiment, description will be made on a biometric information registration process to be executed by a business shop window terminal in a financial business shop via an IC card, and on a biometric information authentication process to be executed at an automated teller machine (ATM). The biometric information is assumed to be biometric feature parameters effective for identifying an individual.

In the biometric feature parameter registration process at the business shop window terminal, encrypted biometric feature parameters for individual authentication are registered in an IC card at the window terminal. The window terminal is connected to a biometric authentication apparatus with an IC card drive. Biometric feature parameters to be registered are encrypted and transferred directly to the IC card from the biometric authentication apparatus with the IC card drive, without involvement of the window terminal. At an automated teller machine (ATM), the encrypted biometric feature parameters are read from the IC card and transferred to a biometric authentication apparatus connected to ATM, and an authentication process is executed in the biometric authentication apparatus. The media is not limited only to an IC card, but other media may also be used if it is a portable electronic media such as an RFID tag.

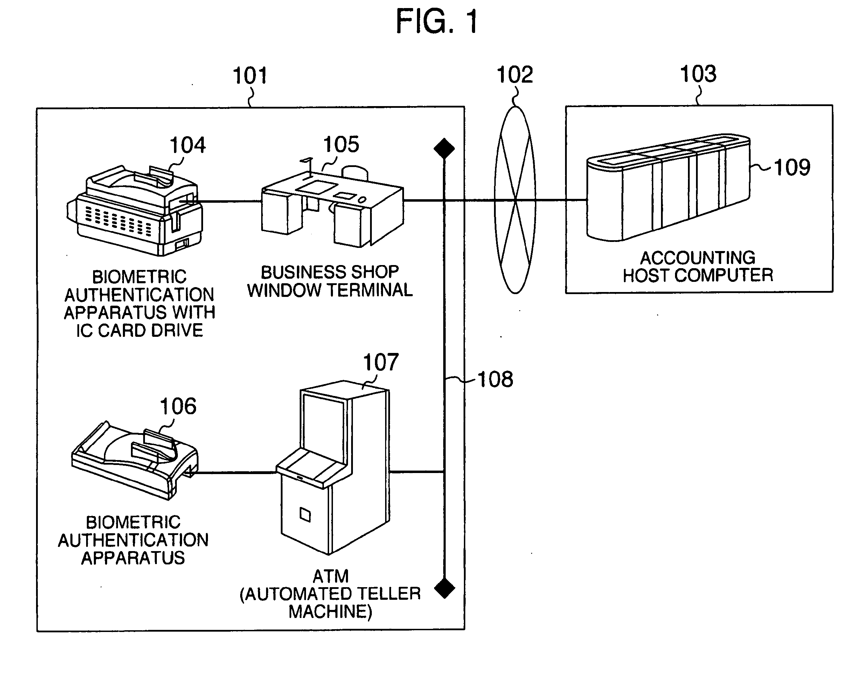

Fig. 1 shows an example of the overall configuration of a system. A financial business shop 101 is connected via a wide area network 102 to a data center 103 installing an accounting host computer 109. In the financial business shop 101, a business shop window terminal 105 and an ATM 107 are interconnected by a LAN 108 in the business shop. The business shop window terminal 105 is connected to a biometric authentication apparatus 104 with an IC card drive. ATM 107 is connected to a biometric authentication apparatus 106, and an IC card drive is built in ATM.

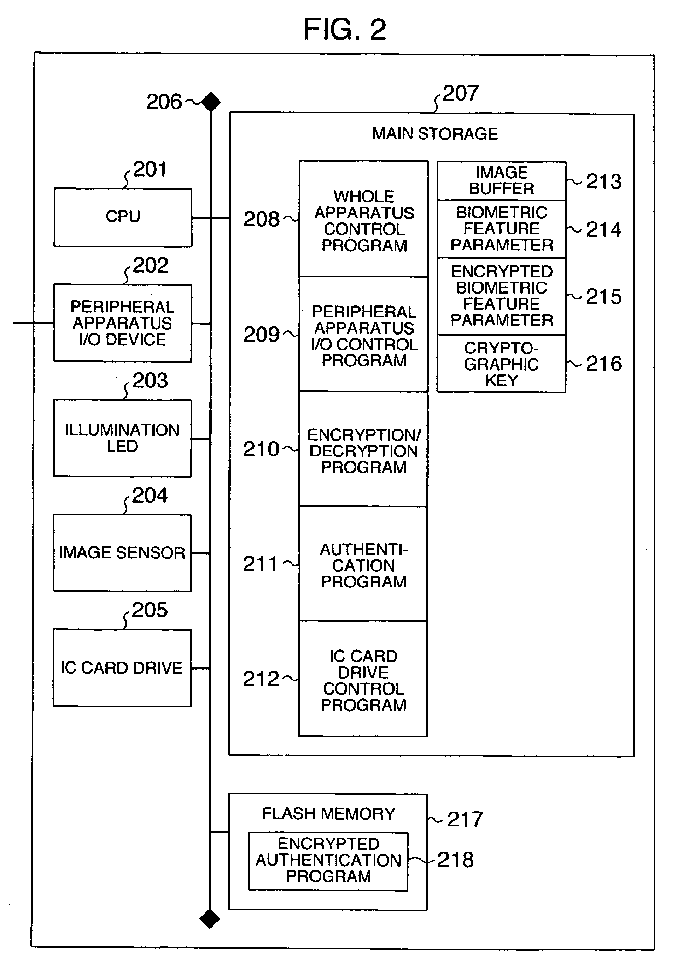

First, with reference to Figs. 2, 3 and 4, a process of registering biometric feature parameters at the business shop window terminal 105 according to the preferred embodiment of the invention is described. Fig. 2 is a diagram showing an example of the structure of the biometric authentication apparatus 104 with an IC card drive. A CPU 201 is a processor for executing data processing of the apparatus and controls and processes various programs and data to be described later. A peripheral apparatus I/O device 202 is an interface for interconnecting the biometric authentication apparatus 104 and business shop window terminal 105. An illumination LED 203 is used when a biological image is acquired. For example, a near infrared LED suitable for acquiring a finger venous pattern is used for finger venous pattern authentication. An image sensor 204 is used for acquiring a biological image, and may be a CCD device or the like. The image sensor acquires a venous pattern of a finger illuminated with LED 203. An IC card drive 205 is used for registering encrypted biometric feature parameters in an IC card.

A main storage 207 is constituted of a volatile memory (DRAM or the like). When the power of the authentication apparatus is turned down, stored data is extinguished. The main storage stores various programs and data for operating the apparatus. Programs and data are read from a flash memory 217 to be described later and stored in the main storage 207. A whole apparatus control program 208 is a program for controlling the entirety of the authentication apparatus 104 including the IC card drive 205. A peripheral apparatus I/O control program 209 controls the peripheral apparatus I/O device 202.

An encryption/decryption program 210 executes two processes. One process decrypts an encrypted authentication program 218 stored in the flash memory (hereinafter called non-volatile memory) 217 and stores it in a field 211 as an authentication program. The other process encrypts the biometric feature parameters to be registered, before they are written in an IC card. The biometric feature parameters are generated by the authentication program 211 . An IC card drive control program 212 is a program for controlling the IC card drive 205.

These programs have various functions, execute various processes, and are controlled by the hardware architecture of CPU 201 as described above. In the present invention, the description is mainly directed to the programs. Obviously, the various functions of each program may be represented as control means, encryption means, authentication means, registration means, verification means and the like, and each means may be represented as a unit.

An image buffer 213 is a field for storing biological image data (raw data) acquired with the image sensor 204. A biometric feature parameter field 214 stores biometric feature parameters generated from the biological image data stored in the image buffer 213 in accordance with the authentication program 211, for example, by extracting only a venous pattern from the biological image data. An encrypted biometric feature parameter field 215 stores data in the biometric feature parameter field 214 encrypted by the encryption/decryption program 210. Data (encrypted biometric feature parameters) in the field 215 is stored in the IC card by the IC card drive 205, as registered biometric feature parameters. Even if the business shop window terminal 105 is connected or involved between the IC card drive 205 and authentication apparatus, the encrypted biometric feature parameters acquired by the authentication apparatus are not stored (left) at the window terminal 105, but are registered directly in the IC card by the IC card drive 205. A cryptographic key field 216 stores key data necessary for the encryption/decryption program 210 to encrypt/decrypt data. One of the features of the present invention is that this key data is acquired by the business shop window terminal 105 connected to the biometric authentication apparatus, and by ATM 107 via the peripheral apparatus I/O device. A bus 206 interconnects the processor and devices in the authentication apparatus. Data in the non-volatile memory 217 is not erased even when the power of the authentication apparatus is turned off, and the encrypted authentication program 218 is stored in the non-volatile memory 217. As the authentication apparatus is activated, the encryption/decryption program 210 decrypts the encrypted authentication program 218 by using the cryptographic key 216, and stores it in the authentication program field 211.

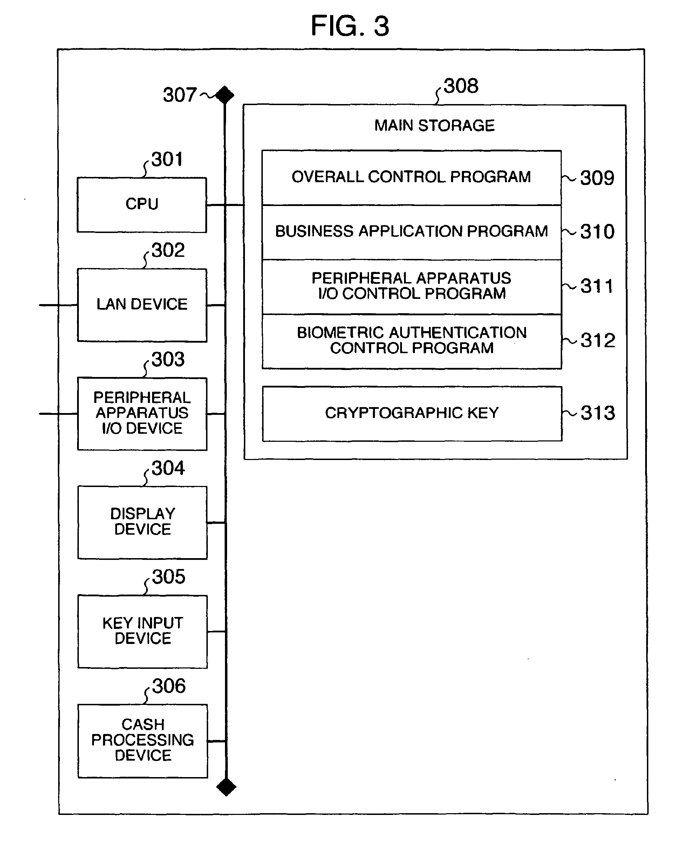

Fig. 3 is a diagram showing an example of the structure of the business shop window terminal 105. The window terminal 105 is installed at a counter of the financial agency, is a computer with which an operator performs transaction works such as money receipt, money payment and exchange, and is also a terminal equipment for executing a biometric authentication registration process.

A CPU 301 is a processor for executing data processing of the apparatus and various controls. A LAN device 302 is a device for interconnecting LAN 108 of the business shop and the window terminal which is connected to the accounting host computer 109 via LAN 108. A peripheral apparatus I/O device 303 is an interface for interconnecting the window terminal to the biometric authentication apparatus with an IC card drive 104. A display device 304 is a monitor for displaying a registration result of biometric feature parameters (a status of success or failure, excluding biometric feature parameters), customer transactions, items necessary for transactions, and the like, to an operator operating the window terminal. A key input device 305 is used for inputting data by an operator. A cash processing device 306 is used for cash processing at the window terminal. A main storage 308 stores various programs and data. An overall control program 309 controls the entirety of the window terminal. A business application program field 310 stores a business application program for transactions at the window. A peripheral apparatus I/O control program 311 controls the peripheral apparatus I/O device 303. A biometric authentication apparatus control program 312 controls the biometric authentication apparatus 104 with an IC card drive connected via the peripheral apparatus I/O device 303. A cryptographic key 313 is used for activating the biometric authentication apparatus with an IC card drive 104 and encrypting biometric feature parameters to be registered in an IC card. A bus 307 interconnects the devices in the window terminal.

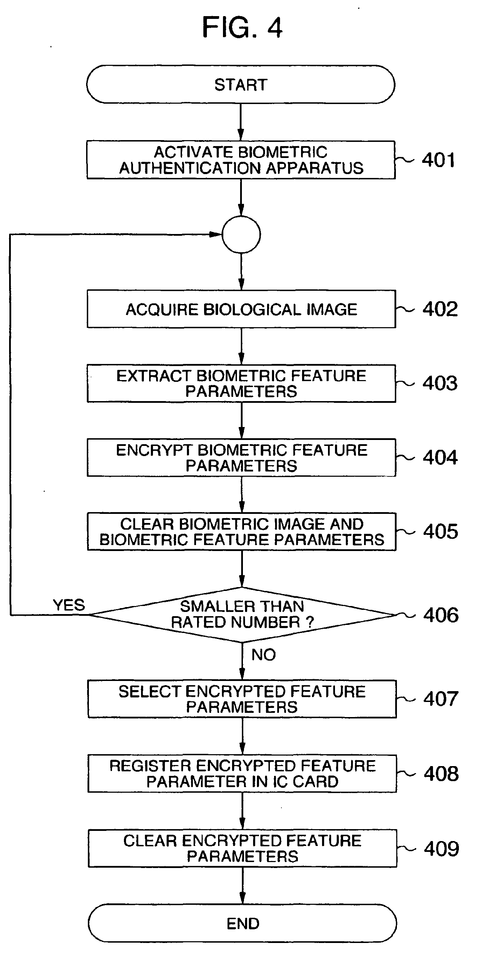

With reference to Fig. 4, description will be made on the operations to be executed by the biometric authentication apparatus with an IC card drive 104 and business shop window terminal 105. Steps 401, 406, 407 and 408 are executed by the biometric authentication apparatus with an IC card drive 104 in accordance with an instruction output from the business shop window terminal 105.

As the input device 305 selects a biometric authentication registration term displayed on the display device 304 of the window terminal 105, the overall control program 309 develops biometric authentication functions to the biometric authentication apparatus 104. At Step 401 the biometric authentication apparatus control program 312 stored in the business shop window terminal 105 transmits an activation signal for a biometric feature parameter registration process and the cryptographic key 313 to the biometric authentication apparatus with an IC card drive 104. In the biometric authentication apparatus 104, CPU 201 starts operating in response to the received activation signal, and the whole apparatus control program 208 stores the received cryptographic key 313 in the field 216. Thereafter, the whole apparatus control program 208 activates the encryption/decryption program 210 which decrypts the encrypted authentication program 218 in the non-volatile memory 217 by using the cryptographic key in the field 216 and stores it in the field 211. Thereafter, the authentication program is activated. The following anti-tampering is therefore provided.

As described above, the encrypted authentication program 218 is stored in the non-volatile memory 217 and developed to the field 211 of the main storage 207 upon activation. While the power is turned on and the biometric authentication apparatus operates normally, communications with the external of the apparatus are encrypted by using the cryptographic key in the field 216. The internal of the biometric authentication apparatus cannot be accessed unless the authorized terminal is connected. Accordingly, even if the authentication program 211 is stored in the main storage 207 in an analyzable state, an illegal access from the external is inhibited. On the other hand, while the power is not supplied to the biometric authentication apparatus, the encrypted authentication program 218 is stored only in the non-volatile memory 217. By encrypting the authentication program, it becomes difficult for a third party to analyze, forge and falsify the non-volatile memory 217.

A first scheme has been described above in which the encrypted authentication program is stored in the non-volatile memory 217 and the decrypted and developed authentication program is stored in the volatile memory 207.

Other schema may be considered. In a second scheme, the encrypted authentication program is stored in the volatile memory 207. In a third scheme, the encrypted authentication program 218 is developed in the non-volatile memory 217 to store the decrypted authentication program therein. However, the second scheme is not realistic because the encrypted authentication program is erased upon turning off the power of the authentication apparatus. In the third scheme, if the power of the authentication apparatus is turned off before the decrypted authentication program in the non-volatile memory 217 is erased, the decrypted authentication program is left in the non-volatile memory 217. This is not proper in terms of security.

From these reasons, the first scheme is more realistic and highly secure, as compared with the other second and third schema. In this embodiment, when the authentication apparatus is activated, the encrypted authentication program in the non-volatile memory 217 is decrypted and stored in the main storage 207. The decrypted authentication program continues to stay in the main storage 207 until the power of the authentication apparatus is turned off. In a more preferred example, each time biometric feature parameters are extracted and authenticated, the encrypted authentication program is decrypted and developed in the main storage. After the processing is completed, the authentication program in the main storage is erased. In this example, the time while the authentication program exists in the apparatus in an analyzable state (executable state) is shortened so that it is expected that security is improved further.

Next, as the authentication program 211 is correctly decrypted and stored in the main storage 207 and activated, the business shop window terminal 105 and biometric authentication apparatus with an IC card drive 104 mutually establish apparatus authentication by using the cryptographic key. Even if a third party steals the biometric authentication apparatus and connects it to another unauthorized control computer, the authentication program does not start so that it is impossible to operate the authentication apparatus. Further, as described above, since the authentication program is encrypted and stored in the non-volatile memory 217, even if a third party breaks and analyzes the authentication apparatus, it is very difficult to know the content of the authentication program. In the above description of activation, analyzing the authentication program can be made difficult by clearing (or disabling) the decrypted authentication program stored in the field 211 upon shut-down of the window terminal 105 or operation termination of the authentication apparatus 104 due to power breakage.

The authentication program 211 controls the illumination LED 203 and image sensor 204 to acquire a biological image and store it in the image buffer 213 (Step 402). Thereafter, the authentication program 211 reads the biological image stored in the image buffer 213, extracts biometric feature parameters to be registered in an IC card and characteristic data for selecting the biometric feature parameters, respectively from the read image, and stores the extracted results in the biometric feature parameter field 214 (Step 403). Selecting the feature parameters to be registered means to select the feature parameters from data repetitively registered at Step 406 to be described later. The characteristic data is, for example, in the case of finger venous authentication, criterion data to be used for selecting biometric feature parameters suitable for registration such as an inclination of fingers. The biometric feature parameters are simply called biometric information, and the biometric authentication apparatus has acquiring mean or an acquiring unit for acquiring biometric information.

The whole apparatus control program 208 activates again the encryption/decryption program 210. Namely, in the above description although the encryption/decryption program has the function of activating and decrypting (enabling) the authentication program, in the following description the encryption/decryption program is again activated to use the function of encrypting the acquired biometric feature parameters. As the program 210 is activated again, the biometric feature parameters in the field 214 are encrypted by using the cryptographic key in the field 216 and stored in the encrypted biometric feature parameter field 215 (Step 404). Thereafter, in order to prevent data from outflowing, the image buffer 213 and biometric feature parameter field 214 are cleared (Step 405).

The business shop window terminal 105 makes the biometric authentication apparatus with an IC card drive 104 repetitively execute the processes at Steps 402 to 405 until the repetition reaches a rated number, to store the results in the encrypted biometric feature parameter field 215 (Step 406). In response to an instruction from the business shop window terminal 105, the authentication program 211 selects the encrypted feature parameters to be registered in the IC card from the data in the field 215, in accordance with the characteristic data (criterion data) extracted at Step 403 (Step 407).

In response to an instruction from the window terminal 105, the whole apparatus control program 208 writes the selected encrypted feature parameters in the IC card by using the IC card drive 205 and the IC card drive control program 212 (Step 408). Thereafter, in order not to leave the encrypted feature parameters in the apparatus, the encrypted biometric feature parameter field 215 is cleared (Step 409). In the above description, although each process is executed in response to an instruction from the window terminal 105, the process may be executed automatically only in the authentication apparatus. Although it may be considered that the field cleared at Step 405 may be cleared at the same time when Step 409 is executed, the field at Step 405 is preferably cleared before the repetition process at Step 406. This is because the data size becomes large by the repetition process so that the size of the image buffer 213 is required to be large. As compared to the process of clearing the encrypted data at Step S409, data to be cleared at Step 405 is not encrypted so that this data is cleared as soon as possible to improve security.

With the processes from Step 401 to 409, the biometric feature parameters are not output to the business shop window terminal 105, but they are encrypted in the biometric authentication apparatus and registered in the IC card.

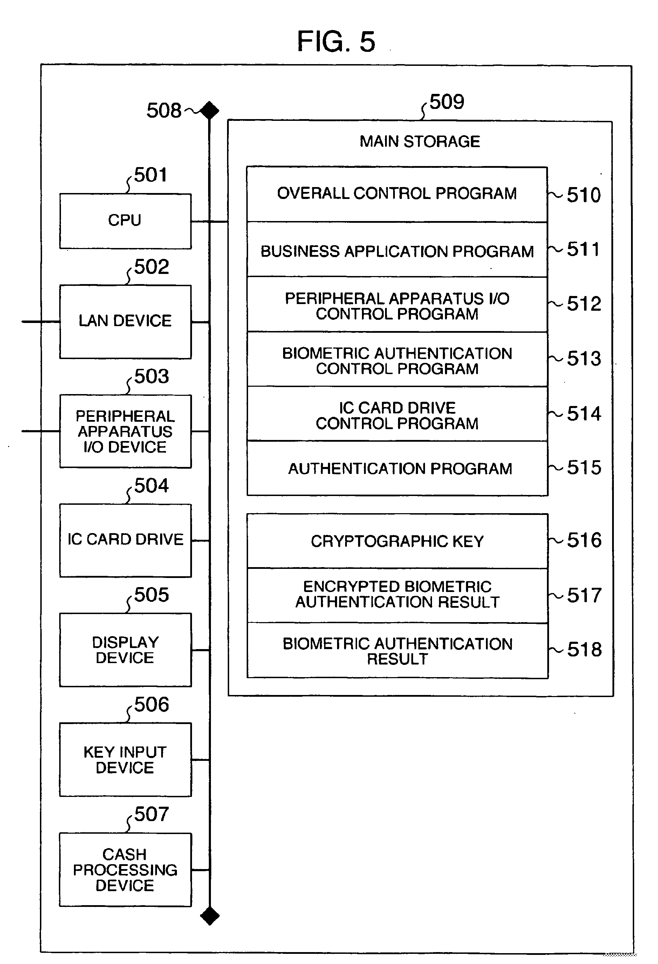

Next, with reference to Figs. 5, 6, 7 and 8, description will be made on an exemplary authentication process at ATM by using the biometric feature parameters registered in the IC card. ATM or automated teller machine is installed at a financial agency and automatically executes the processes for money receipt, money payment, transfer and the like requested by an end user. Although ATM is used, it may be called an automatic transaction machine to be applied to a terminal or a computer used for user authentication.

Fig. 5 is a diagram showing an example of the structure of ATM 107.

A CPU 501 is a processor for executing data processing of ATM and various processes and controls such as control of various programs and generation of commands. A LAN device 502 is a device for interconnecting LAN 108 of the business shop and ATM which is connected to the accounting host computer 109 via LAN 108. A peripheral apparatus I/O device 503 is an interface for interconnecting ATM and the biometric authentication apparatus 106. An IC card drive 504 is mounted on an inlet port of ATM and separated from the biometric authentication apparatus 106 for individual authentication. A display device 505 is a monitor for displaying transaction information and a biometric authentication result to a user. A key input device 506 is used for inputting a transaction menu and a password by a user. A cash processing device 507 is used for cash processing at ATM. A main storage 509 stores various programs and data.

An overall control program 510 controls the entirety of ATM. A business application program field 511 stores a business application program for transactions at ATM. A peripheral apparatus I/O control program 512 controls the peripheral apparatus I/O device 503. A biometric authentication apparatus control program 513 controls the biometric authentication apparatus 106 connected via the peripheral apparatus I/O device 503. An encryption/decryption program 515 decrypts an encrypted authentication result (excluding biometric feature parameters) transmitted from the biometric authentication apparatus 106 by using a cryptographic key 516. An encrypted biometric authentication result field 517 stores the encrypted authentication result transmitted from the biometric authentication apparatus 106. A biometric authentication result field 518 stores the encrypted biometric authentication result decrypted by the cryptographic key 516.

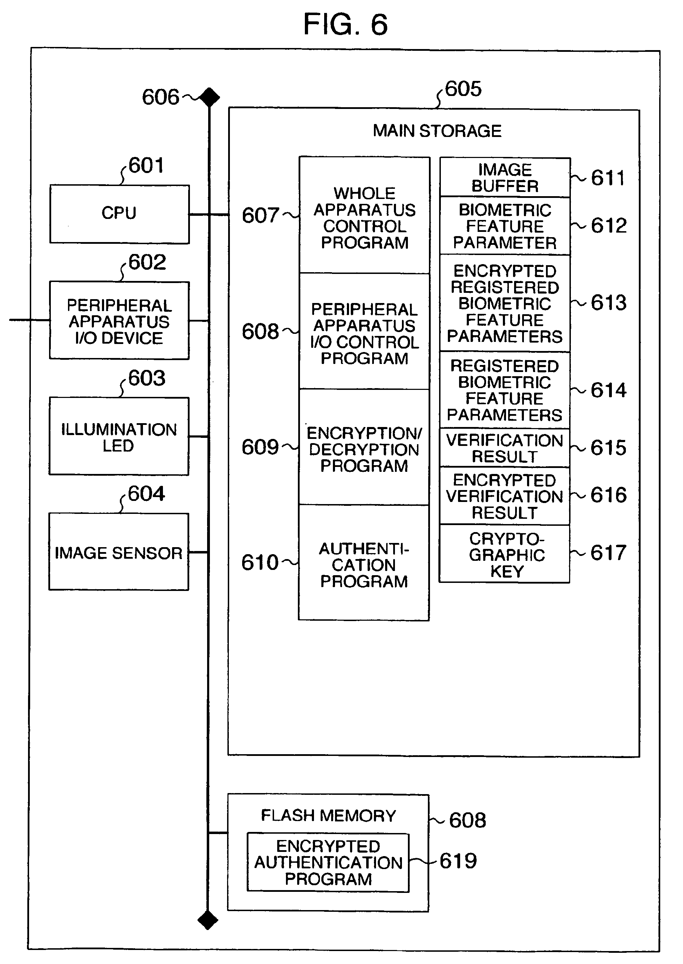

Fig. 6 is a diagram showing an example of the structure of the biometric authentication apparatus 106 connected to ATM. Reference numerals 601 to 604 correspond to reference numerals 201 to 204 shown in Fig. 2. These devices have similar functions as those described in Fig. 2 so that the description thereof is omitted. A main storage 605 stores various programs and data for operating the apparatus. A whole apparatus control program 607 is a program for controlling the entirety of the authentication apparatus. Reference numerals 608 to 612 correspond to reference numerals 209 to 211 and reference numerals 213 and 214 shown in Fig. 2. These programs and data are similar to those shown in Fig. 2 so that the description thereof is omitted. An encrypted biometric feature parameter field 613 stores the encrypted biometric feature parameters registered in the IC card which parameters are received by the biometric authentication apparatus from ATM via the peripheral apparatus I/O device 602. A registered biometric feature parameter field 614 stores the encrypted feature parameters in the field 613 decrypted by the encryption/decryption program 609 by using the cryptographic key 617. A verification result field 615 stores a verification result between the biometric feature parameters 612 and the registered biometric feature parameters 614 obtained by the authentication program 610. An encrypted verification result field 616 stores the verification result in the field 615 decrypted by the encryption/decryption program 609 by using the cryptographic key 617. The cryptographic key 617 is acquired from ATM 107 connected to the biometric authentication apparatus. A bus 606 interconnects the processor and various devices. Reference numerals 618 and 619 correspond to reference numerals 217 and 218 shown in Fig. 2.

It is herein assumed that the biometric authentication apparatus 106 is activated at the same time when the power of ATM is turned on or ATM is activated. More specifically, the following operations are assumed. As the authentication apparatus 106 is activated, it receives the cryptographic key from ATM 107 and stores it in the field 617. At the same time, the authentication apparatus decrypts the encrypted authentication program 619 stored in the non-volatile memory 618 by using the cryptographic key 617 and stores it in the field 610 of the main storage 605. Further, the operation of the authentication apparatus 106 is terminated upon normal close of ATM, shut-down or power-down in an abnormal state. As the authentication apparatus is terminated, the authentication program 610 is cleared. The configuration of the non-volatile memory 618 and main storage (volatile memory) 605 is used for connection establishment between the ATM control unit and the authentication apparatus by decrypting the authentication program. The reason for this configuration has been described in the examples or schema of the business shop system, and the reason is not duplicated herein.

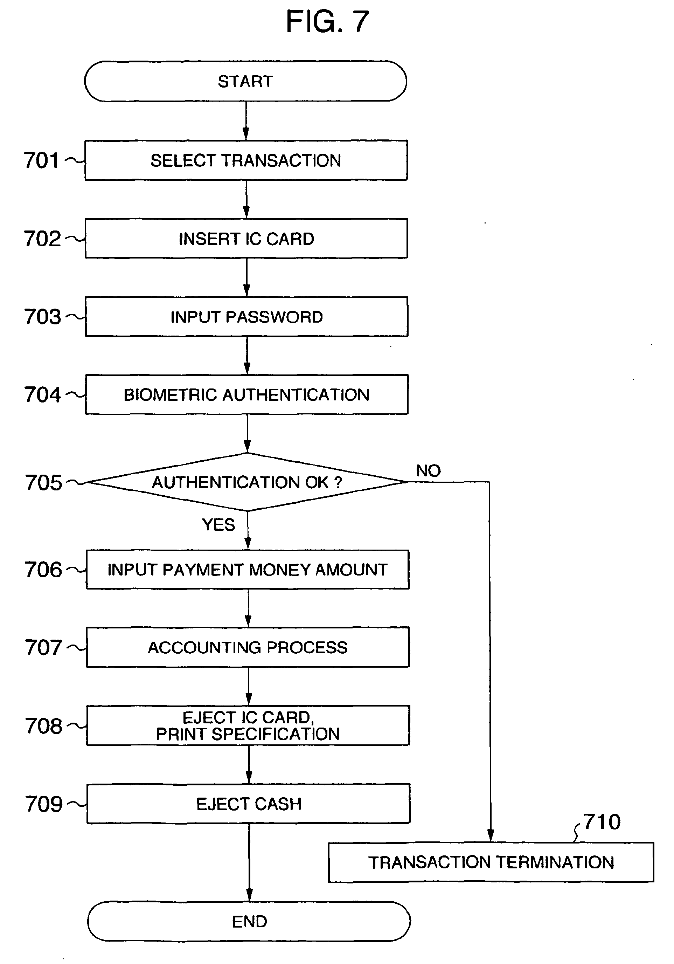

With reference to Fig. 7, description will be made on the operations of ATM 107 and the biometric authentication apparatus 106. In response to an instruction from CPU (control means, control unit) 501, ATM displays the initial screen on the display device 505, the initial screen including various items (menu) such as money receipt, money payment, and transfer. A user of ATM selects a transaction item from the transaction menu displayed on the display device 505 by using the key input device 506 (Step 701). The display device 505 and key input device 506 are constituted of a touch panel, and are simply called a display device (display means, display unit) where appropriate. For example, it is assumed that the user selects a deposit payment transaction. In accordance with a guidance "please insert card" displayed on the display device 505, the user inserts an IC card into an ATM card inlet port. The inserted IC card is fetched into the IC card drive 504 which reads the contents of the IC card (Step 702). Next, the display device 505 displays a ten-key and a guidance for inputting a password. In accordance with the guidance, the user inputs a password by using the input key device 506 (Step 703). The input password is transmitted to the host 109, and ATM receives a verification result (success or failure). It is desired that the password is encrypted by using the cryptographic key 516 to thereafter transmit it. If the verification result for the password input is a failure, the display device 505 displays a guidance "please enter again" to urge a re-input of the password. If the verification result is a success, the biometric information registered in the IC card is read or a guidance such as "please place a finger on authentication apparatus" on the display device 505. The control and processing by the biometric authentication apparatus control program 513 in ATM are passed to the whole apparatus control program 607 in the authentication apparatus 106 to execute a biometric authentication process (step 704). One of the features of the example resides also in that the password verification process is executed in ATM whereas the biometric authentication process is executed in the biometric authentication apparatus, to thereby improve security.

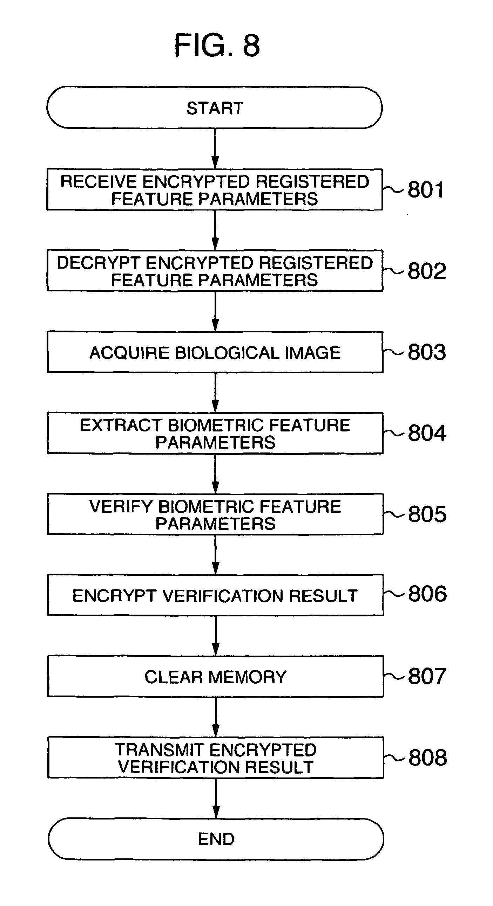

The details of the biometric authentication process at Step 704 will be described with reference to Figs. 8 and 6. The IC card drive 504 of ATM 107 reads the encrypted registered biometric feature parameters stored in the IC card (a read process) and the parameters are transmitted directly to the authentication apparatus 106. Namely, ATM (control unit) executes a process of transmitting the encrypted biometric information in the encrypted state to the biometric authentication apparatus. Although ATM 107 has also the cryptographic key 516, it does not decrypt the encrypted registered biometric feature parameters read from the IC card. Upon reception of the encrypted feature parameters, the authentication apparatus 106 stores the parameters in the encrypted registered feature parameter field 613 (Step 801). Next, the whole apparatus control program 607 activates the encryption/decryption program 609 which decrypts the encrypted data stored in the field 613 by using the cryptographic key 617 (decode process, a decode unit) and stores the decrypted data in the registered biometric feature parameter field 614 (Step 802).

In accordance with the guidance displayed on the display device 505 of ATM, the user places a finger on the biometric authentication apparatus 106. The authentication program 610 in the apparatus 106 controls the illumination LED 603 and image sensor 604 to acquire a biological image and store it in the image buffer 611 (Step 803). The authentication program 610 reads the biological image stored in the image buffer 611, extracts the biometric feature parameters for authentication from the image and stores the parameters in the biometric feature parameters 612 (Step 804). A function of acquiring a biological image, information and feature parameters of a user is simply called an acquisition process (means, unit) where appropriate.

Next, the authentication program 610 reads the biometric feature parameters 612 and the registered biometric feature parameters 614, calculates a distance value therebetween (matching, verifying process, unit). If the distance value is smaller than a threshold value, it means a verification acceptance, whereas if it is equal to or larger than the threshold value, it means a verification rejection. This verification result is stored in the field 615. A status code regarding the verification result such as the verification rejection is also stored in the field 615 (Step 805). For example, if the result is a verification rejection, a status code is affixed representing a wrong place of a biological body on the authentication apparatus or an inability of acquiring biometric information because of too strong a force of depressing a biological body. The authentication apparatus transmits this code to ATM 107. For example, if the result is a verification rejection, in accordance with this code, a guidance representative of a method of placing a biological body matching the code can be displayed to an ATM user. Since a proper guidance for biometric authentication can be issued, it is possible to mitigate inconvenience that a user repeats biometric authentication too many times.

The encryption/decryption program 609 encrypts the verification result stored in the field 615 by using the cryptographic key 617 and stores it in the field 616 (Step 806). Thereafter, in order to prevent data from outflowing, the whole apparatus control program 607 clears data stored in the fields 616 and 615 (Step 807). In this manner, it is not necessary for ATM to erase the biometric feature parameters left in the biometric feature apparatus 106, and it is possible to prevent the biometric feature parameters left in the apparatus from being leaked to the external. Lastly, the encrypted verification result (excluding the biometric information itself) is transmitted to ATM and the encrypted verification result in the apparatus is erased (Step 808). If the verification result is a rejection, ATM repeats the processes at Steps 801 to 808 until the repetition number reaches the rated number. With the processes of Fig. 7 described above, the biometric authentication process at Step 704 is completed. The verification result encrypted at Step 808 is transmitted to ATM. The reason for this is as follows.

It is sufficient that the authentication apparatus transmits data of authentication acceptance or rejection to ATM. However, if the data format is leaked to a third party, an unauthorized apparatus for always transmitting data of authentication acceptance may be connected to ATM without involvement of the authorized biometric authentication apparatus. In this case, ATM receives data of authentication acceptance without biometric authentication so that the tampering preventive effects of the biometric authentication apparatus may be lost.

If the biometric authentication at Step 704 is OK, the flow advances to Step 706, whereas if the biometric authentication is NG, the flow advances to a transaction termination process at Step 710 (Step 705).

The user inputs a payment money amount to ATM 107 by using the key input device 506 (Step 706), and ATM 107 performs an accounting process in accordance with the input money amount, by communicating with the accounting host computer 109 (Step 707). Thereafter, ATM ejects the IC card from the IC card inlet port and prints a specification writing the transaction result (Step 708). Lastly, ATM outputs paper money corresponding to the input money amount from the cash processing device 507 and the cash is output from a cash outlet port to thereafter terminate a series of processes (Step 709).

With the processes at Steps 701 to 709, the authentication process is completed in the state that the biometric feature parameters are not output to an external from the biometric authentication apparatus 106. Although the IC card drive 504 and the biometric authentication apparatus 106 are discrete, they may be structured as a single apparatus like that shown in Fig. 2. In this case, the encrypted registered biometric information read from an IC card does not pass through ATM so that security can be improved further.

In a further example, although biometric feature parameters are registered in an IC card at the business shop window terminal and ATM executes a biometric authentication process, registration of the biometric feature parameters may be performed also by the biometric authentication apparatus connected to ATM or the biometric authentication may be performed by the business shop window terminal. In this case, the registered biometric information will not pass through the business shop window terminal. If registration and authentication are to be performed by a single biometric authentication apparatus, data 613 to 616 shown in Fig. 6 is added to the main storage 207 shown in Fig. 2.

In a further example, although one cryptographic key is used, a cryptographic key for decrypting the authentication program and a cryptographic key for encrypting/decrypting an authentication result may be used, and a cipher method may be an arbitrary method.

In the example, the authentication program in the biometric authentication apparatus is stored in the non-volatile memory in an encrypted state while the apparatus does not operate, and is decrypted as the apparatus is activated. In addition to the encrypted authentication program for security purpose, it is effective to divide the authentication program, store a portion of the program outside the biometric authentication apparatus and store the remaining portion of the program in the non-volatile memory of the apparatus. Namely, the portion of the authentication program stored outside the apparatus and the remaining portion of the authentication program stored in the non-volatile memory of the apparatus are coupled to recover the original authentication program. Encryption and division of the authentication program may be combined.

In the authentication at ATM, the biometric authentication process is executed after the verification process by the password. Inputting first the password provides the following advantages. In a transaction not using the biometric authentication, the process advances in the order of "select transaction menu", "insert cash card" and "input password". An ATM user is accustomed to this process which does not change if the biometric authentication is performed thereafter. An ATM user is not therefore puzzled. On the other hand, if the password verification process is executed after the biometric authentication process, it is advantageous in that transmission timings, transition of displayed screens and the like are not at all necessary to be changed. In this case, the input screen for the password is displayed to execute the password verification process, only when the verification result transmitted from the biometric authentication apparatus is OK. Double security of a user can thus be provided.

In the example, biometric feature parameters are encrypted and registered in an IC card by using the cryptographic key in the window terminal and ATM. The cryptographic key for encrypting the biometric feature parameters is not necessarily to be in the window terminal or ATM, but it may be in the biometric authentication apparatus. In this case, when encrypted biometric feature parameters are read or written between the IC card and the biometric authentication apparatus via the window terminal and ATM, security can be improved because the cryptographic key does not exist in the window terminal and ATM and the encrypted biometric feature parameters cannot be analyzed in principle.

According to the example, it is possible to prevent a malicious third party from stealing biometric information or biometric feature parameters. It is also possible to prevent the program from being analyzed, altered or stolen, the program executing the biometric feature parameter acquisition process and biometric feature parameter verification process for biometric authentication. Even if the apparatus is disassembled and analyzed, falsification can be prevented.

## Claims

1. A device for authentication of an individual, comprising:
a terminal device (105); and
a biometric authentication apparatus (104) structured to be discrete from and connected to said terminal device (105), said biometric authentication apparatus having means (205) for writing information in an IC card and means (204) for acquiring a biological image,
wherein said biometric authentication apparatus (104) is adapted to
control said acquiring means (204) to acquire the biological image and store the acquired biological image in an image buffer (213) of a main storage (207) of the biometric authentication apparatus (104),
extract biometric information and criterion data from the stored, acquired biological image and store the extracted biometric information and criterion data in a biometric feature parameter field (214) of the main storage (207) of the biometric authentication apparatus (104), wherein said criterion data is to be used for selecting biometric information suitable for registration,
encrypt the stored, extracted biometric information and store the encrypted biometric information in an encrypted biometric feature parameter field (215) of the main storage (207) of the biometric authentication apparatus (104),
clear the image buffer (213) and the biometric feature parameter field (214), repeat, one after another, the preceding controlling, extracting, encrypting and clearing operations a predetermined number of times to obtain a plurality of encrypted biometric information, then
select from the plurality of encrypted biometric information encrypted biometric information to be written in the IC card in accordance with said criterion data, then
cause said writing means (205) to write the selected encrypted biometric information in the IC card, and thereafter
clear the encrypted biometric feature parameter field (215).

2. The device of claim 1, wherein said biometric authentication apparatus (104) further comprises storage means (216) for storing a cryptographic key.

3. The device of claim 2, wherein said biometric authentication apparatus (104) further comprises:
a storage unit (211) for storing an encrypted authentication program for authenticating the biometric information; and
a decryption unit (210) for reading the cryptographic key from said storage means (216) and decrypting the encrypted authentication program by using the cryptographic key.

4. The device of claim 3, wherein the extraction of the biometric information from the biological image acquired by said acquiring means (204) is controlled by the authentication program decrypted by said decryption unit (210).

5. The device of any of claims 2 to 4, wherein said biometric authentication apparatus (104) further comprises means for reading the cryptographic key from said storage means (216), and encrypting the biometric information by using the cryptographic key.

6. The device of claim 2, wherein said biometric authentication apparatus (104) further comprises:
a non-volatile storage unit (217) for storing an encrypted authentication program (218) for controlling said acquiring means (204); and wherein
the main storage (207) is a volatile storage unit that is adapted to store the encrypted authentication program decrypted by using the cryptographic key, wherein said acquiring means (204) is adapted to acquire the biological image in accordance with the authentication program stored in said volatile storage unit.

7. The device of any preceding claim, wherein said biometric information is a finger venous pattern and said criterion data is the inclination of a finger.

## Patentansprüche

1. Gerät zur Authentifikation eines Individuums, mit
einem Endgerät (105) und
einem biometrischen Authentifizierungsgerät (104), das so aufgebaut ist, dass es getrennt von dem Endgerät (105) und mit diesem verbindbar ist, wobei das biometrische Authentifizierungsgerät eine Einrichtung (205) zum Schreiben von Information in eine Chipkarte und eine Einrichtung (204) zum Erhalten eines biologischen Bildes aufweist,
wobei das biometrische Authentifizierungsgerät (104) dazu ausgelegt ist,
die Erhaltungseinrichtung (204) dazu zu steuern, das biologische Bild zu erhalten und in einem Bildpufferspeicher (213) eines Hauptspeichers (207) des biometrischen Authentifizierungsgeräts (104) zu speichern,
biometrische Information und Kriteriumsdaten aus dem gespeicherten, erhaltenen biologischen Bild zu extrahieren und die extrahierte biometrische Information und die Kriteriumsdaten in einem Biometriemerkmal-Parameterfeld (214) des Hauptspeichers (207) des biometrischen Authentifizierungsgeräts (104) zu speichern, wobei die Kriteriumsdaten dazu zu verwenden sind, für die Registrierung geeignete biometrische Information auszuwählen,
die gespeicherte extrahierte biometrische Information zu verschlüsseln und die verschlüsselte biometrische Information in einem Verschlüsselungsbiometriemerkmals-Parameterfeld (215) des Hauptspeichers (207) des biometrischen Authentifizierungsgeräts (104) zu speichern,
den Bildpufferspeicher (213) und das Biometriemerkmal-Parameterfeld (214) zu leeren,
nacheinander die vorstehenden Steuerungs-, Extraktions-, Verschlüsselungs- und Leer-Operationen eine vorbestimmte Anzahl von Malen zu wiederholen, um mehrere verschlüsselte Biometrieinformationen zu erhalten,
anschließend aus den mehreren verschlüsselten Biometrieinformationen eine verschlüsselte Biometrieinformation auszuwählen, die gemäß der Kriteriumsdaten in die Chipkarte zu schreiben ist,
anschließend die Schreibeinrichtung (205) zu veranlassen, die ausgewählte verschlüsselte Biometrieinformation in die Chipkarte zu schreiben, und
anschließend das verschlüsselte Biometriemerkmals-Parameterfeld (215) zu leeren.

2. Vorrichtung nach Anspruch 1, wobei das biometrische Authentifizierungsgerät (104) ferner eine Speichereinrichtung (216) zum Speichern eines Kryptographieschlüssels aufweist.

3. Vorrichtung nach Anspruch 2, wobei das biometrische Authentifizierungsgerät (104) ferner aufweist:
eine Speichereinheit (211) zum Speichern eines verschlüsselten Authentifizierungsprogramms zum Authentifizieren der biometrischen Information und
eine Entschlüsselungseinheit (210) zum Auslesen des Kryptographieschlüssels aus der Speichereinheit (216) und Entschlüsseln des verschlüsselten Authentifizierungsprogramms unter Verwendung des Kryptographieschlüssels.

4. Vorrichtung nach Anspruch 3, wobei die Extraktion der biometrischen Information aus dem durch die Erhaltungseinrichtung (204) erhaltenen biologischen Bild durch das Authentifizierungsprogramm gesteuert wird, das durch die Entschlüsselungseinheit (210) entschlüsselt wurde.

5. Vorrichtung nach einem der Ansprüche 2 bis 4, wobei das biometrische Authentifizierungsgerät (104) ferner eine Einrichtung aufweist, um den Kryptographieschlüssel aus der Speichereinrichtung (216) auszulesen und die biometrische Information unter Verwendung des Kryptographieschlüssels zu entschlüsseln.

6. Vorrichtung nach Anspruch 2, wobei das biometrische Authentifizierungsgerät (104) ferner aufweist:
eine nicht-flüchtige Speichereinheit (217) zum Speichern eines verschlüsselten Authentifizierungsprogramms (218) zur Steuerung der Erhaltungseinrichtung (204),
wobei der Hauptspeicher (207) eine flüchtige Speichereinheit ist, die dazu ausgelegt ist, das unter Verwendung des Kryptographieschlüssels verschlüsselte Authentifizierungsprogamm zu speichern, wobei die Erhaltungseinrichtung (204) dazu ausgelegt ist, das biologische Bild gemäß dem Authentifizierungsprogramm zu erhalten, das in der flüchtigen Speichereinheit gespeichert ist.

7. Vorrichtung nach einem der vorstehenden Ansprüche, wobei die biometrische Information ein Fingervenenmuster ist, und die Kriteriumsdaten die Neigung eines Fingers betreffen.

## Revendications

1. Dispositif pour l'authentification d'un individu, comportant :
un dispositif terminal (105), et
un appareil d'authentification biométrique (104) structuré pour être distinct dudit dispositif terminal (105) et relié à celui-ci, ledit appareil d'authentification biométrique ayant des moyens (205) pour écrire des informations dans une carte IC et des moyens (204) pour acquérir une image biologique,
dans lequel ledit appareil d'authentification biométrique (104) est adapté pour
commander lesdits moyens d'acquisition (204) afin d'acquérir l'image biologique et mémoriser l'image biologique acquise dans un tampon d'images (213) d'une mémoire principale (207) de l'appareil d'authentification biométrique (104),
extraire des informations biométriques et des données de critère de l'image biologique mémorisée, acquise et mémoriser les informations biométriques extraites et les données de critère dans un champ de paramètre de caractéristique biométrique (214) de la mémoire principale (207) de l'appareil d'authentification biométrique (104), dans lequel lesdites données de critère doivent être utilisées pour sélectionner des informations biométriques appropriées en vue d'un enregistrement,
crypter les informations biométriques mémorisées, extraites et mémoriser les informations biométriques cryptées dans un champ de paramètre de caractéristique biométrique crypté (215) de la mémoire principale (207) de l'appareil d'authentification biométrique (104),
effacer le tampon d'images (213) et le champ de paramètre de caractéristique biométrique (214),
répéter, l'une après l'autre, les opérations précédentes de commande, d'extraction, de cryptage et d'effacement un nombre de fois prédéterminé afin d'obtenir une pluralité d'informations biométriques cryptées, puis
sélectionner, parmi la pluralité d'informations biométriques cryptées, des informations biométriques cryptées à écrire dans la carte IC conformément auxdites données de critère, puis
amener lesdits moyens d'écriture (205) à écrire les informations biométriques cryptées sélectionnées dans la carte IC, et ensuite
effacer le champ de paramètre de caractéristique biométrique crypté (215).

2. Dispositif selon la revendication 1, dans lequel ledit appareil d'authentification biométrique (104) comporte en outre des moyens de mémorisation (216) pour mémoriser une clé cryptographique.

3. Dispositif selon la revendication 2, dans lequel ledit appareil d'authentification biométrique (104) comporte en outre :
une unité de mémorisation (211) pour mémoriser un programme d'authentification crypté afin d'authentifier les informations biométriques, et
une unité de décryptage (210) pour lire la clé cryptographique à partir desdits moyens de mémorisation (216) et décrypter le programme d'authentification crypté en utilisant la clé cryptographique.

4. Dispositif selon la revendication 3, dans lequel l'extraction des informations biométriques de l'image biologique acquise par lesdits moyens d'acquisition (204) est commandée par le programme d'authentification décrypté par ladite unité de décryptage (210)

5. Dispositif selon l'une quelconque des revendications 2 à 4, dans lequel ledit appareil d'authentification biométrique (104) comporte en outre des moyens pour lire la clé cryptographique à partir desdits moyens de mémorisation (216), et crypter les informations biométriques en utilisant la clé cryptographique.

6. Dispositif selon la revendication 2, dans lequel l'appareil d'authentification biométrique (104) comporte en outre :
une unité de mémorisation non volatile (217) pour mémoriser un programme d'authentification crypté (218) afin de commander lesdits moyens d'acquisition (204), et dans lequel
la mémoire principale (207) est une unité de mémorisation volatile qui est adaptée pour mémoriser le programme d'authentification crypté décrypté en utilisant la clé cryptographique, dans lequel lesdits moyens d'acquisition (204) sont adaptés pour acquérir l'image biologique conformément au programme d'authentification mémorisé dans ladite unité de mémorisation volatile.

7. Dispositif selon l'une quelconque des revendications précédentes, dans lequel lesdites informations biométriques sont un motif veineux de doigt et lesdites données de critère sont l'inclinaison d'un doigt.
